# EUROPÄISCHE PATENTANMELDUNG

(11) **EP 1 921 488 A1**
(43) Veröffentlichungstag der Anmeldung: **14.05.2008**
(21) Anmeldenummer: 07021753.4
(22) Anmeldetag: 09.11.2007
(51) Int. Cl.: G02F 1/13, G02F 1/13357

(54) **Flüssigkristall-Anzeigevorrichtung**

(30) Priorität: 13.11.2006 DE 202006017277 U
(71) Anmelder: Element Displays Dr. Wiemer GmbH, 89134 Blaustein (DE); Innovative Glassysteme GmbH & Co. KG, 88048 Friedrichshafen (DE)
(72) Erfinder: Wiemer, Wolfram, 89134 Blaustein (DE); Meisel, Thomas, 88697 Bermatingen (DE)
(74) Vertreter: Fleck, Hermann-Joseph

(57) **Zusammenfassung**

Die Erfindung bezieht sich auf eine Flüssigkristall-Anzeigevorrichtung mit mindestens einem LCD-Modul und einem diese(s) aufnehmenden Gehäuse (10), das auf seiner Rückseite und/oder in einem umgebenden Gehäuserahmen (10.1) zumindest teilweise lichtdurchlässig ausgebildet ist. Ein stabiler Aufbau bei günstiger Fertigung wird dadurch erhalten, dass das mindestens eine LCD-Modul mit einer transparenten Vergussmasse an eine Frontscheibe (11) aus Glas oder Kunststoff optisch angekoppelt ist und dass die Frontscheibe (11) in den Gehäuserahmen (10.1) eingegossen ist (Fig. 1).

## Beschreibung

Die Erfindung bezieht sich auf eine Flüssigkristall-Anzeigevorrichtung mit mindestens einem LCD-Modul und einem diese(s) aufnehmenden Gehäuse, das auf seiner Rückseite und/oder in einem umgebenden Gehäuserahmen zumindest teilweise lichtdurchlässig ausgebildet ist.

Eine derartige Flüssigkristall-Anzeigevorrichtung ist in der WO 2006/050910 A1 angegeben. Bei dieser bekannten Flüssigkristall-Anzeigevorrichtung ist ein Anzeigemodul bzw. eine Anzeigeeinheit mit einer Flüssigkristallschicht und mehreren davor und dahinter angeordneten, die Funktionsweise der Anzeigevorrichtung bestimmenden weiteren Schichten in einem Gehäuse mit z.B. lichtdurchlässiger Rückwand und die Anzeigeeinheit seitlich umfassender Umrandung angegeben, die ebenfalls zum Teil oder vollständig lichtdurchlässig ausgeführt sein kann. Das lichtdurchlässige Material kann z.B. Glas oder Kunststoff sein, wobei das Material klar oder trübe ausgeführt und, falls erwünscht, auch geeignet eingefärbt sein kann. In oder auf der Rückwand oder der Umrandung ist z.B. eine Beleuchtungsvorrichtung mit Leuchtdioden angeordnet, die auch mit Unterstützung des Umgebungslichtes zur Wirkung kommen können.

Der Erfindung liegt die Aufgabe zugrunde, eine Flüssigkristall-Anzeigevorrichtung der genannten Art bereit zu stellen, die bei günstiger Fertigung einen robusten Aufbau und optimale optische Eigenschaften besitzt.

Diese Aufgabe wird mit den Merkmalen des Anspruches 1 gelöst. Hierbei ist vorgesehen, dass das mindestens eine LCD-Modul mit einer transparenten Vergussmasse an eine Frontscheibe aus Glas oder Kunststoff optisch angekoppelt ist und dass die Frontscheibe in den Gehäuserahmen eingegossen ist.

Das mindestens eine LCD-Modul, das eine Flüssigkristallschicht und erforderliche und gegebenenfalls zusätzliche Schichten aufweist, ist auf diese Weise stabil in das Gehäuse eingebracht, so dass es auch unter widrigen Witterungsbedingungen eingesetzt werden kann.

Die Herstellung und der robuste Aufbau werden dabei dadurch begünstigt, dass die Frontscheibe aus einem entspiegelten Glas und der Gehäuserahmen aus Metall oder Glas oder Kunststoff oder aus einer Kombination von Elementen aus diesen Materialien hergestellt sind, wobei die Entspiegelung zu einer guten Lesbarkeit unter verschiedenen Blickwinkeln und Lichtverhältnissen beiträgt.

Eine für den Aufbau und die Anwendung vorteilhafte Ausgestaltung wird dadurch erhalten, dass der Gehäuserahmen einen quaderförmigen Raum randseitig mit vier Seitenwandelementen umgibt, und ferner dadurch, dass mindestens zwei parallel voneinander beabstandete Seitenwandelemente mit einer Auflage versehen sind, auf der die Frontscheibe mit ihrem Randbereich aufgelegt ist.

Der stabile Aufbau wird auch dadurch unterstützt, dass auf der Innenseite des Gehäuserahmens zumindest abschnittsweise eine Auflage angebracht oder einstückig ausgebildet ist, auf der die Frontscheibe mit ihrem Randbereich aufgelegt ist.

Weitere vorteilhafte Ausgestaltungen für den Aufbau und die Funktion bestehen darin, dass mindestens ein Seitenwandelement aus Glas oder Kunststoff hergestellt ist, das/der insbesondere transparent ist.

Die Funktion und die Erkennung der dargestellten Information werden ferner dadurch begünstigt, dass die Gehäuserückseite mit einer Rückplatte versehen ist, auf der zur Beleuchtung des mindestens einen Anzeigemoduls Leuchtdioden angeordnet sind, oder dass die Leuchtdioden auf einer im Gehäuseinneren angeordneten Leiterplatte angeordnet sind.

Hierbei bestehen vorteilhafte Ausgestaltungsvarianten darin, dass die Rückplatte als Scheibe aus Glas oder Kunststoff ausgebildet ist.

Die Fertigung und ein stabiler Aufbau werden des Weiteren dadurch begünstigt, dass die Rückplatte ebenfalls mittels einer Vergussmasse randseitig in den oder auf dem Gehäuserahmen eingegossen oder angegossen ist, und weiterhin dadurch, dass die Rückplatte ebenfalls auf der Auflage aufgelegt ist.

Zu einer einfachen Handhabung und Bedienung tragen des Weiteren die Maßnahmen bei, dass das Gehäuse auf seiner Rückseite und/oder im Gehäuserahmen zur Datenübertragung und/oder zum Anschluss einer Energieversorgung mit mindestens einem Steckverbinder zum Anschluss der Energieversorgung und/oder mit mindestens einer Lichtleiterbuchse versehen ist. Auch ein Steckverbinder für übliche Datenkabel aus metallischen Leitern ist denkbar.

Vorteilhafte Maßnahmen für den Außeneinsatz bestehen ferner darin, dass das Gehäuse mit mindestens einer feuchtigkeitsdichten Kabeldurchführung versehen ist.

Weitere vorteilhafte Maßnahmen für den Betrieb unter ungünstigen Witterungsbedingungen bestehen darin, dass zum Druckausgleich Membranelemente oder mindestens ein Ventilelement vorgesehen ist, die zu einem Luftaustausch unter Verhinderung des Eindringens von Feuchtigkeit ausgebildet sind.

Die Erfindung wird nachfolgend anhand von Ausführungsbeispielen unter Bezugnahme auf die Zeichnungen näher erläutert. Es zeigen:
- Fig. 1: wesentliche Teile der Flüssigkristall-Anzeigevorrichtung in perspektivischer, auseinander gezogener Darstellung,
- Fig. 2: einen Querschnitt der Flüssigkristall-Anzeigevorrichtung,
- Fig. 3: eine Rückplatte der Flüssigkristall-Anzeigevorrichtung mit Anschlusselementen,
- Fig. 4: einen Gehäuseausschnitt der Flüssigkristall-Anzeigevorrichtung in perspektivischer Ansicht und
- Fig. 5: einen Ausschnitt aus einem alternativ ausgestalteten Gehäuse.

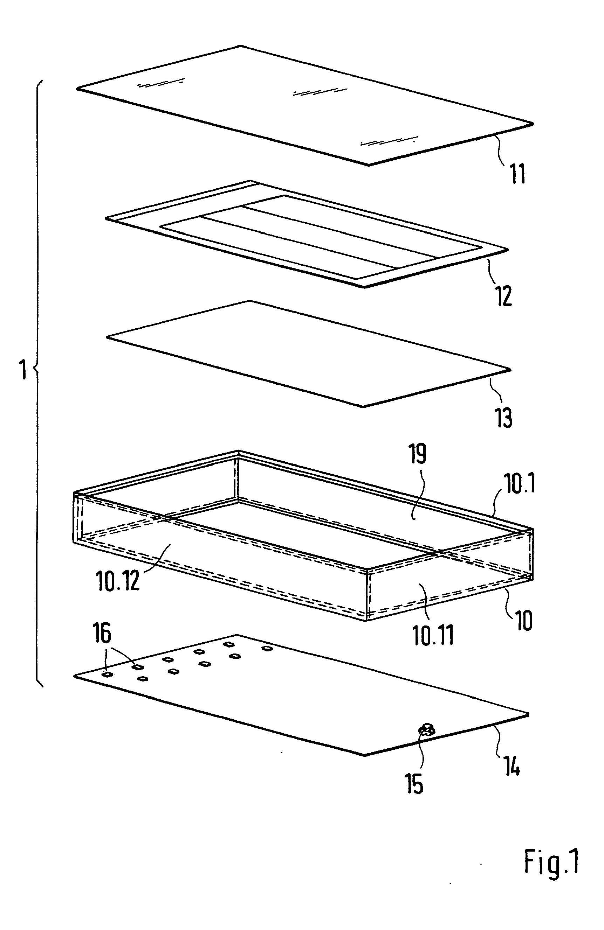

Fig. 1 zeigt in schematischer Darstellung eine Flüssigkristall-Anzeigevorrichtung mit einem einen äußeren Rahmen 10.1 und eine Auflage 19 auf der Innenseite des Rahmens aufweisenden Gehäuse 10, einem Flüssigkristall-Zellen(LCD)-Modul mit einer Flüssigkristallschicht 12, auf deren einem Betrachter zugewandten Vorderseite eine Frontscheibe 11 und von dem Betrachter abgewandten Rückseite ein Lichtwandler oder eine gegebenenfalls teildurchlässige Reflexionsschicht 13 aufgebracht sind, sowie mit einer auf der Gehäuserückseite angeordneten Rückplatte 14. Auf der Rückplatte sind mehrere Leuchtelemente, insbesondere Leuchtdioden 16, sowie vorzugsweise mindestens ein Druckausgleichselement 15 angeordnet. Das LCD-Modul weist die für eine Flüssigkristall-Anzeigevorrichtung notwendigen weiteren Schichten, wie Frontpolarisationsfilter und rückwärtige Polarisationsfilter und, soweit für bestimmte Funktionen erwünscht, weitere (nicht gezeigte) Schichten auf.

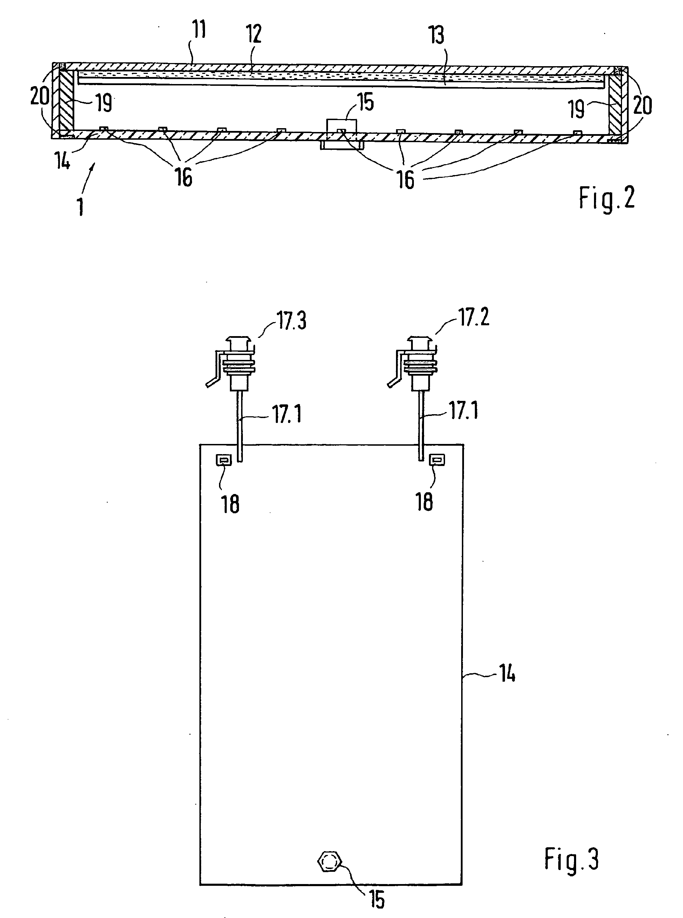

Wie Fig. 2 zeigt, steht die Frontscheibe 11 randseitig über die Flüssigkristallschicht und die darauf angeordneten weiteren Schichten über und ist auf der frontseitigen umlaufenden Randfläche der Auflage 19 aufgelegt, die gegenüber der frontseitigen Randfläche des Gehäuserahmens 10.1 etwa um die Dicke der Frontscheibe 11 zurückversetzt ist. Zwischen dem umlaufenden Gehäuserahmen 10.1 und dem umfangsseitigen Rand der Frontscheibe 11 ist eine Vergussmasse 20 zum Abdichten und Halten der Frontscheibe 11 eingebracht. Das LCD-Modul ist mit einer transparenten Vergussmasse an die aus entspiegeltem Glas hergestellte Frontscheibe 11 angekoppelt, die eine Stärke im Bereich zwischen 1 und 10 mm, beispielsweise etwa 2 oder 3 mm oder dazwischen aufweist.

Zum Eingießen der Glasscheibe in den durchgehenden Gehäuserahmen 10.1, der aus Metall oder Glas oder einer Kombination von Elementen aus diesen Materialien besteht, wird z.B. Epoxidharz verwendet. Der umlaufende Rand kann sehr dünn (größer als 0,1 mm) ausgebildet werden, um ein nahezu nahtloses Aneinanderreihen von LCD-Modulen zu einer Zeile zu ermöglichen. Das Gehäuse 10 kann ein einzelnes LCD-Modul oder auch mehrere derartige Module umfassen.

Wie die Fig. 1 und 2 weiterhin zeigen, wird auf der Rückseite des Gehäuses 10 die Rückplatte 14 eingegossen, die vorteilhaft als Glas- oder Kunststoffscheibe gefertigt ist und ebenfalls auf der Auflage 19 aufgelegt ist, nämlich auf deren umlaufendem rückseitigem flachem Rand, der gegenüber dem rückseitigen Rand des Gehäuserahmens 10.1 ebenfalls nach innen zurückversetzt ist, so dass die Rückplatte 14 ebenfalls von dem Gehäuserahmen 10.1 umlaufend eingefasst ist und ähnlich mit Vergussmasse 20 dichtend eingegossen sein kann, wie die Frontscheibe 11.

Die in Fig. 3 gezeigte Rückplatte 14 ist z.B. als opake oder transparente Rückscheibe ausgebildet, so dass rückseitiges Umgebungslicht durch sie zur Beleuchtung des LCD-Moduls hindurch treten kann, um die Helligkeit der Anzeige gegebenenfalls zusammen mit den Lichtquellen 16 zu erhöhen. Die Hinterleuchtung mit den Lichtquellen 16, insbesondere den Leuchtdioden, kann alternativ auf einer Leiterplatte angeordnet werden, die vor dem Zusammenbau auf der Innenseite der Rückplatte 14 montiert, z.B. aufgeklebt oder aufgeschraubt wird.

Der Lichtwandler 13 oder Reflektor wird vor der Montage der Rückplatte 14 auf die Rückseite der Flüssigkristallschicht (FK-Zelle) aufgeklebt.

Die Bautiefe des Gehäuses 10 wird wesentlich durch die integrierte Hinterleuchtung bestimmt und liegt typischerweise im Bereich zwischen 15 mm und 80 mm.

Fig. 3 zeigt weiterhin im Bereich der Rückplatte 14 oder des Gehäuserahmens angeordnete Steckverbinder 17 mit Eingangsstecker 17.2 und Ausgangsstecker 17.3, die über Kabel 17.1 angeschlossen sind. Ferner ist die Rückplatte 14 mit Lichtleiterbuchsen 18 versehen.

Das Gehäuse 10 und die elektrischen Anschlüsse sind wetterfest ausgebildet. Die elektrischen Signale werden von einer zentralen Elektronik mit einem Encoder insbesondere seriell gewandelt und mit Lichtleiterfaser übertragen. Im oder am LCD-Modul werden sie dann wieder decodiert und zur gegebenenfalls vorgesehenen Kaskadierung mit dem folgenden Modul wieder encodiert. Dabei ist die Datenübertragung mit dem vorstehend genannten Aufbau durch die zumindest teilweise lokal transparente Rückscheibe möglich. Für die Gleichspannungsversorgung zum Betreiben der Flüssigkristallanzeige und für die Hinterleuchtung ist eine 2- bzw. 3-polige Spannungsversorgung mit wetterfestem Stecker vorgesehen und eine z.B. 3-polige Durchführung.

Das mindestens eine Druckausgleichselement 15 dient zur Sicherung des Druckausgleichs in dem Gehäuse gegenüber der äußeren Atmosphäre und besteht z.B. aus Membranelementen, die einen Luftaustausch ohne ein Eindringen von Feuchtigkeit gewährleisten. Auch sind Druckausgleichsventile als Druckausgleichselemente 15 möglich.

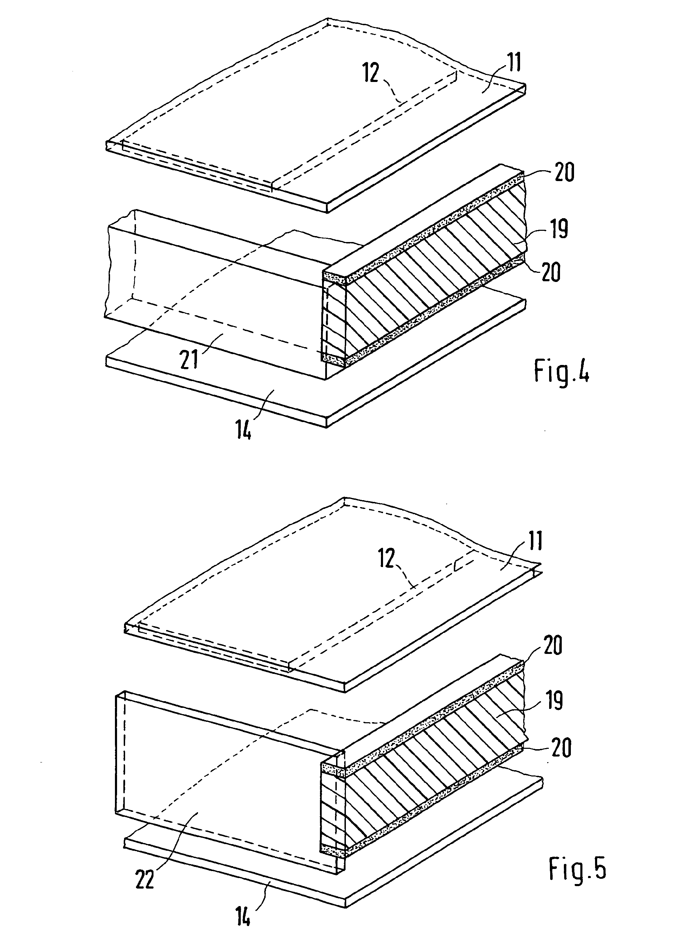

Weitere Ausführungsbeispiele für den Aufbau des Gehäuses 10 der Flüssigkristall-Anzeigevorrichtung sind in den Fig. 4 und 5 gezeigt. Bei dem Ausführungsbeispiel nach Fig. 4 bilden zwei zueinander parallele Seitenwandelemente des einen quaderförmigen Raums randseitig umgebenden Gehäuserahmens 10.1 die Auflage 19, welche auf ihrem oberen und unteren schmalen Rand mit der aufgetragenen Vergussmasse 20 zum Aufnehmen des über die Flüssigkristallschicht 12 überstehenden Randes der Frontscheibe 11 einerseits und der Rückplatte 14 andererseits versehen ist. Diese beiden Seitenwandelemente sind z.B. als Metallleiste ausgebildet. Die beiden anderen parallel voneinander beabstandeten Seitenwandelemente sind aus einer vorzugsweise transparenten Vergussmasse 21 gebildet, so dass auch durch diese die Frontscheibe 11 bzw. Rückplatte 14 dichtend gehalten wird und Licht in das Gehäuse einfällt. Dabei liegen die beiden, die Auflage 19 bildenden Seitenwandelemente zwischen den Endabschnitten der beiden anderen Seitenwandelemente.

Bei dem in Fig. 5 gezeigten Ausführungsbeispiel ist gegenüber dem Ausführungsbeispiel nach Fig. 4 die Auflage 19 mit der Vergussmasse 20 entsprechend, z.B. als Metallleiste ausgebildet, während die anderen beiden parallel voneinander beabstandeten Seitenwandelemente aus dünnen, vorzugsweise transparenten Glasleisten 22 oder Kunststoff gebildet sind, deren Stärke z.B. zwischen 0,3 und 5 mm liegt, wobei aber auch dickere Gläser möglich sind. Die Glasleisten stehen mit ihren schmalen Längsrändern über die die Vergussmasse 20 tragenden Ränder der die Auflage 19 bildenden Seitenwandelemente vor. Damit kann eine enge Aneinanderreihung von LCD-Modulen zu einer Zeile erfolgen.

## Patentansprüche

1. Flüssigkristall-Anzeigevorrichtung mit mindestens einem LCD-Modul und einem diese(s) aufnehmenden Gehäuse (10), das auf seiner Rückseite und/oder in einem umgebenden Gehäuserahmen (10.1) zumindest teilweise lichtdurchlässig ausgebildet ist,
**dadurch gekennzeichnet,**
**dass** das mindestens eine LCD-Modul mit einer transparenten Vergussmasse an eine Frontscheibe (11) aus Glas oder Kunststoff optisch angekoppelt ist und
**dass** die Frontscheibe (11) in den oder an dem Gehäuserahmen (10.1) eingegossen oder angegossen ist.

2. Anzeigevorrichtung nach Anspruch 1,
**dadurch gekennzeichnet,**
**dass** die Frontscheibe (11) aus einem entspiegelten Glas und der Gehäuserahmen (10.1) aus Metall oder Glas oder Kunststoff oder aus einer Kombination von Elementen aus diesen Materialien hergestellt sind.

3. Anzeigevorrichtung nach einem der vorhergehenden Ansprüche,
**dadurch gekennzeichnet,**
**dass** der Gehäuserahmen (10.1) einen quaderförmigen Raum randseitig mit vier Seitenwandelementen (10.11, 10.12) umgibt.

4. Anzeigevorrichtung nach Anspruch 3,
**dadurch gekennzeichnet,**
**dass** mindestens zwei parallel voneinander beabstandete Seitenwandelemente (10.11. bzw. 10.12) mit einer Auflage (19) versehen sind, auf der die Frontscheibe mit ihrem Randbereich aufgelegt ist.

5. Anzeigevorrichtung nach einem der vorhergehenden Ansprüche 1 oder 2,
**dadurch gekennzeichnet,**
**dass** auf der Innenseite des Gehäuserahmens (10.1) zumindest abschnittsweise eine Auflage (19) angebracht oder einstückig ausgebildet ist, auf der die Frontscheibe (11) mit ihrem Randbereich aufgelegt ist.

6. Anzeigevorrichtung nach einem der Ansprüche 3 bis 5,
**dadurch gekennzeichnet,**
**dass** mindestens ein Seitenwandelement (10.11, 10.12) aus Glas hergestellt ist, das insbesondere transparent ist.

7. Anzeigevorrichtung nach einem der vorhergehenden Ansprüche,
**dadurch gekennzeichnet,**
**dass** die Gehäuserückseite mit einer Rückplatte (14) versehen ist, auf der zur Beleuchtung des mindestens einen Anzeigemoduls Leuchtdioden (16) angeordnet sind, oder
**dass** die Leuchtdioden (16) auf einer im Gehäuseinneren angeordneten Leiterplatte angeordnet sind.

8. Anzeigevorrichtung nach Anspruch 7,
**dadurch gekennzeichnet,**
**dass** die Rückplatte (14) als Scheibe aus Glas oder Kunststoff ausgebildet ist.

9. Anzeigevorrichtung nach Anspruch 7 oder 8,
**dadurch gekennzeichnet,**
**dass** die Rückplatte (14) ebenfalls mittels einer Vergussmasse (20) randseitig in den Gehäuserahmen (10.1) eingegossen oder auf diesem angegossen ist.

10. Anzeigevorrichtung nach einem der Ansprüche 7 oder 9,
**dadurch gekennzeichnet,**
**dass** die Rückplatte (14) ebenfalls auf der Auflage (19) aufgelegt ist.

11. Anzeigevorrichtung nach einem der vorhergehenden Ansprüche,
**dadurch gekennzeichnet,**
**dass** das Gehäuse (10) auf seiner Rückseite und/oder im Gehäuserahmen (10.1) zur Datenübertragung und/oder zum Anschluss einer Energieversorgung mit mindestens einem Steckverbinder (17) zum Anschluss der Energieversorgung (17.1) und/oder mit mindestens einer Lichtleiterbuchse (18) versehen ist.

12. Anzeigevorrichtung nach einem der vorhergehenden Ansprüche,
**dadurch gekennzeichnet,**
**dass** das Gehäuse (10) mit mindestens einer feuchtigkeitsdichten Kabeldurchführung versehen ist.

13. Anzeigevorrichtung nach einem der vorhergehenden Ansprüche,
**dadurch gekennzeichnet,**
**dass** zum Druckausgleich Membranelemente oder mindestens ein Ventilelement vorgesehen ist, die zu einem Luftaustausch unter Verhinderung des Eindringens von Feuchtigkeit ausgebildet sind.
